# EUROPEAN PATENT APPLICATION

(11) **EP 4 300 341 A1**
(43) Date of publication of application: **03.01.2024**
(21) Application number: 22209042.5
(22) Date of filing: 23.11.2022
(51) Int. Cl.: G06F 21/64, H04L 9/00

(54) **DEVICES AND METHODS FOR GENERATING EVENT SATELLITE IMAGES**

(30) Priority: 27.06.2022 KR 20220078058
(71) Applicant: Contec Co., Ltd., Daejeon 34133 (KR)
(72) Inventor: LEE, Sunghee, 30104 Sejong-si (KR)
(74) Representative: Frenkel, Matthias Alexander

(57) **Abstract**

Provided is technology for generating an event satellite image by applying additional data to a satellite image captured at an occurrence point in time of a specific event. An event satellite image generation apparatus may include a satellite image information acquisition unit configured to acquire raw data of a satellite image captured at an occurrence point in time of a specific event; an additional data collector configured to collect additional data for the specific event; and an event satellite image generator configured to generate an event satellite image by recording the collected additional data in the acquired raw data of the satellite image.

## Description

### CROSS-REFERENCE TO RELATED APPLICATIONS

This application claims the benefit under 35 USC § 119(a) of Korean Patent Application No. 10-2022-0078058 filed on June 27, 2022 in the Korean Intellectual Property Office, the entire disclosure of which is incorporated herein by reference for all purposes.

### BACKGROUND

### 1. Field

At least one example embodiment relates to technology for generating an event satellite image, and more particularly, to technology for generating an event satellite image by applying additional data to a satellite image captured at an occurrence point in time of a specific event.

### 2. Description of Related Art

An artificial satellite refers to an object that may fly in a predetermined circle or an elliptical orbit around the earth. The artificial satellite may be mounted on a launch vehicle and then fired to enter a predetermined orbit in the space and to perform a variety of predefined operations in the orbit. The artificial satellite functions to exchange data with other ground-based communication/electronic devices (e.g., satellite antennas and set-top boxes connected thereto) and/or to observe the ground surface while orbiting the earth.

To control, for example, monitor the artificial satellite or the launch vehicle and to receive data gathered by the artificial satellite, a space ground station is installed on the ground. The space ground station may communicate with the artificial satellite based on a standardized frequency and communication protocol, may transmit a control signal for a specific operation (e.g., photographing) to the artificial satellite and/or receive data (e.g., image data on the ground surface) acquired by the artificial satellite based on the specific operation, and may perform a variety of processing based on the received data.

Currently, about 1,600 artificial satellites are orbiting the earth and the number of artificial satellites around the earth are expected to increase as a space market is evolved from government-led development to private-led development.

Cited References include Korean Patent Registration No. 1150901 titled "Automatic segmentation method for object-based analysis using high resolution satellite imagery," Korean Patent Registration No. 2388581 titled "Artificial intelligence deep learning applied NFT-based image processing method and its chapter," and Korean Patent Registration No. 2388233 titled "Service providing method performing server of musical platform using NFT based on blockchain."

### SUMMARY

An objective of at least one example embodiment is to generate a utilization service
that may commemorate history by receiving raw data from a satellite.

An objective of at least one example embodiment is to generate and store a satellite image at an occurrence point in time of a specific event

An objective of at least one example embodiment is to generate an event satellite image by applying additional data of a customer to a satellite image and to manage the generated event satellite image using an NFT, thereby enabling commercial transactions in which ownership of the satellite image is clear and transparent.

According to an aspect of at least one example embodiment, there is provided an apparatus for generating an event satellite image, the apparatus including a satellite image information acquisition unit configured to acquire raw data of a satellite image captured at an occurrence point in time of a specific event; an additional data collector configured to collect additional data for the specific event; and an event satellite image generator configured to generate an event satellite image by recording the collected additional data in the acquired raw data of the satellite image.

The additional data collector according to an example embodiment may be configured to collect the additional data for the specific event from a customer terminal.

The additional data collector according to an example embodiment may include, as the additional data for the specific event, at least one of a date, a time, a footprint, a signature of a specific person, an image, and a video at the occurrence point in time of the specific event.

The additional data collector according to an example embodiment may be configured to collect, from the customer terminal, link information of a server in which the additional data for the specific event is recorded.

The event satellite image generation apparatus according to an example embodiment may further include a non-fungible token (NF) processing unit configured to manage the event satellite image based on an NFT. The NFT processing unit may be configured to receive, from a customer terminal, a registration request that includes an original file of the event satellite image and a division number for dividing ownership of the event satellite image, and to generate, on a blockchain, the division number of NFTs each having a unique token ID corresponding to the event satellite image and having an owner address of the event satellite image using a smart contract.

The NFT processing unit according to an example embodiment may be configured to determine a purchaser corresponding to at least one of a plurality of purchaser terminals as a buyer based on an NFT buy request for the event satellite image received from each of the plurality of purchaser terminals, to transmit at least some of the NFTs for the event satellite image from an address of an owner to an address of the buyer using the smart contract, to store, in the blockchain, a history in which ownership of at least some of the NTFs is changed from the address of the owner to the address of the buyer, to register sale of physical goods manufactured using the event satellite image, to conclude a purchase contract for the physical goods based on a purchase request for the physical goods, and to transmit an amount of sales corresponding to the purchase contract from an e-wallet of a consumer to an e-wallet of a customer.

The NFT processing unit according to an example embodiment may be configured to distribute a portion of the amount of sales from the e-wallet of the customer to an e-wallet of each of a plurality of owners each owning at least one NFT for the event satellite image.

According to an aspect of at least one example embodiment, there is provided a method of generating an event satellite image, the method including acquiring raw data of a satellite image captured at an occurrence point in time of a specific event; collecting additional data for the specific event; and generating an event satellite image by recording the collected additional data in the acquired raw data of the satellite image.

The collecting of the additional data according to an example embodiment may include collecting the additional data for the specific event from a customer terminal, or collecting, from the customer terminal, link information of a server in which the additional data for the specific event is recorded.

The collecting of the additional data according to an example embodiment may include including, as the additional data for the specific event, at least one of a date, a time, a footprint, a signature of a specific person, an image, and a video at the occurrence point in time of the specific event.

The event satellite image generation method according to an example embodiment may further include receiving, from a customer terminal, a registration request that includes an original file of the event satellite image and a division number for dividing ownership of the event satellite image; generating, on a blockchain, the division number of NFTs each having a unique token ID corresponding to the event satellite image and having an owner address of the event satellite image using a smart contract; determining a purchaser corresponding to at least one of a plurality of purchaser terminals as a buyer based on an NFT buy request for the event satellite image received from each of the plurality of purchaser terminals; transmitting at least some of the NFTs for the event satellite image from an address of an owner to an address of the buyer using the smart contract; storing, in the blockchain, a history in which ownership of at least some of the NTFs is changed from the address of the owner to the address of the buyer; registering sale of physical goods manufactured using the event satellite image; concluding a purchase contract for the physical goods based on a purchase request for the physical goods; transmitting an amount of sales corresponding to the purchase contract from an e-wallet of a consumer to an e-wallet of a customer; and distributing a portion of the amount of sales from the e-wallet of the customer to an e-wallet of each of a plurality of owners each owning at least one NFT for the event satellite image.

According to some example embodiments, it is possible to generate a utilization service that may commemorate history by receiving raw data from a satellite.

According to some example embodiments, it is possible to generate and store a satellite image at an occurrence point in time of a specific event

According to some example embodiments, it is possible to generate an event satellite image by applying additional data of a customer to a satellite image and to manage the generated event satellite image using an NFT, thereby enabling commercial transactions in which ownership of the satellite image is clear and transparent.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 illustrates an example of an artificial satellite and a ground station according to an example embodiment;
FIG. 2 illustrates an example of movement of an artificial satellite according to an example embodiment;
FIG. 3 is a diagram illustrating an example of an event satellite image generation apparatus according to an example embodiment;
FIG. 4 is a diagram illustrating an example of a configuration of an overall system based on a non-fungible token (NFT) according to an example embodiment;
FIG. 5 is a diagram illustrating another example of a configuration of an overall system based on an NFT according to an example embodiment; and
FIG. 6 is a flowchart illustrating an example of an event satellite image generation method according to an example embodiment.

### DETAILED DESCRIPTION

Specific structural or functional descriptions related to example embodiments according to the concept of the present invention set forth herein are simply provided to explain the example embodiments according to the concept of the present invention and the example embodiments according to the concept of the present invention may be implemented in various forms and are not limited to the example embodiments described herein.

Various modifications may be made to the example embodiments according to the concept of the present invention. Therefore, the example embodiments are illustrated in the drawings and are described in detail with reference to the detailed description. However, the example embodiments are not construed as being limited to the specific disclosure and should be understood to include all changes, equivalents, and replacements within the idea and the technical scope of the present invention.

Unless otherwise defined herein, all terms used herein including technical or scientific terms have the same meanings as those generally understood by one of ordinary skill in the art. Terms defined in dictionaries generally used should be construed to have meanings matching contextual meanings in the related art and are not to be construed as an ideal or excessively formal meaning unless otherwise defined herein.

Hereinafter, example embodiments will be described in detail with reference to the accompanying drawings. However, the scope of the claims is not limited to or restricted by such example embodiments. Like reference numerals refer to like components throughout.

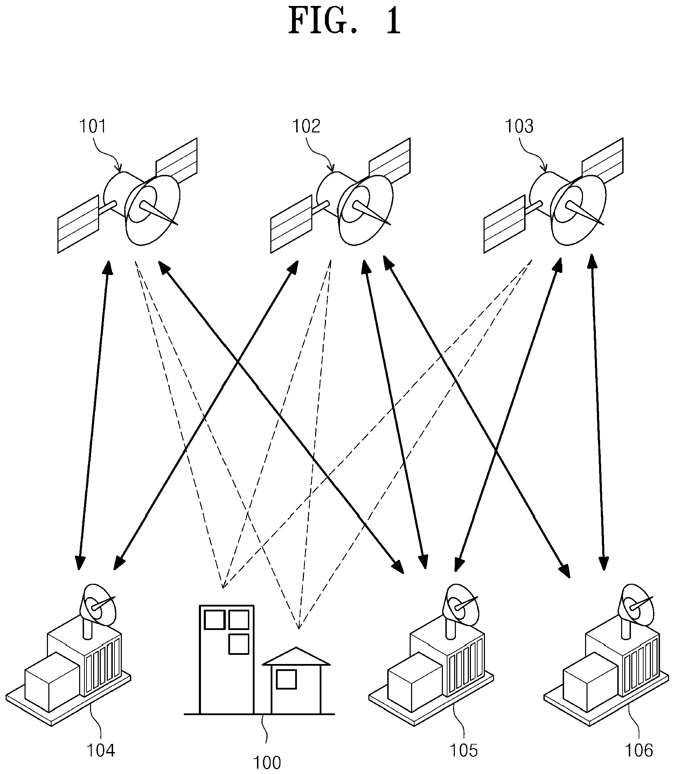

FIG. 1 illustrates an example of an artificial satellite and a ground station according to an example embodiment.

According to an example embodiment, one of ground stations, for example, first to third ground stations 104, 105, and 106, may be configured to communicate with a plurality of artificial satellites, for example, first to third artificial satellites 101, 102, and 103, and/or the plurality of ground stations, the first to third ground stations 104, 105, and 107, may be configured to communicate with one of the artificial satellites, for example, the first to third artificial satellites 101, 102, and 103.

For example, referring to FIG. 1. the first ground station 104 may communicably connect to the first artificial satellite 101 and the second artificial satellite 102 among the first to third artificial satellites 101, 102, and 103 and accordingly, may transmit a control signal to the first artificial satellite 101 and the second artificial satellite 102, or may receive satellite data from the first artificial satellite 101 and the second artificial satellite 102. In this case, the first ground station 104 may not communicate with the third artificial satellite 103 and accordingly, may not transmit a control signal to or receive data from the third artificial satellite 103. Also, the second ground station 105 may communicably connect to the first artificial satellite 102, the second artificial satellite 102, and the third artificial satellite 103, and the third ground station 106 may communicably connect to the second artificial satellite 102 and the third artificial satellite 103.

Accordingly, the first artificial satellite 101 may communicate with the first ground station 104 and the second ground station 105, the second artificial satellite 102 may communicate with the first ground station 104, the second ground station 105 and the third ground station 106, and the third artificial satellite 103 may communicate with the second ground station 105 and the third ground station 106.

Relations between the first to third ground stations 104 to 106 and the first to third artificial satellites 101 to 103 of FIG. 1 are provided as an example only. In addition, the first to third ground stations 104 to 106 and the first to third artificial satellites 101 to 103 may be communicably interconnected through a variety of methods.

Depending on example embodiments, specific at least one ground station may be configured to communicate with only specific at least one artificial satellite. On the contrary, specific at least one artificial satellite may be configured to communicate only with specific at least one ground station.

Also, at least one ground station 104 to 106 may be designed to communicate with only at least one artificial satellite 101 to 103 moving in a relatively near distance.

That is, at least one ground station 104 to 106 corresponding to at least one artificial satellite 101 to 103 may be determined based on a distance therebetween.

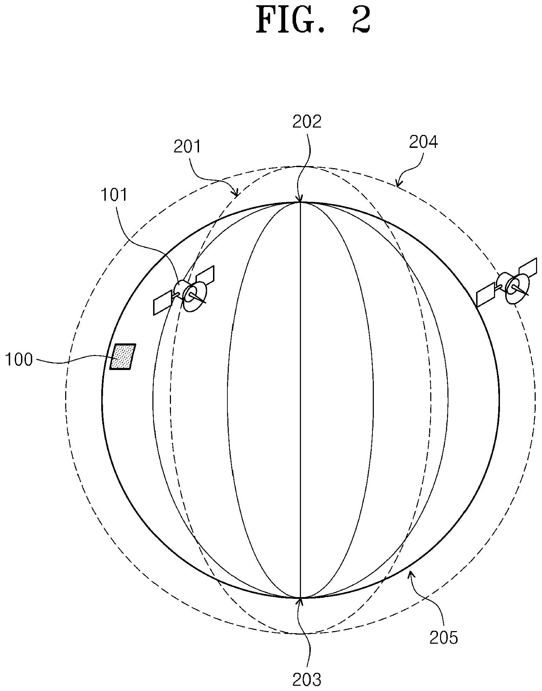

FIG. 2 illustrates an example of describing a movement of an artificial satellite according to an example embodiment.

Referring to FIG. 2, the first and second artificial satellites 101 and 102 move along the respective corresponding orbits 204 and 201 formed in the atmosphere of the earth 205. In this case, the orbits 204 and 201 of the first and second artificial satellites 101 and 102 may be polar orbits. The polar orbits refer to orbits orthogonal through or around the north pole 202 and the south pole 203. If the first and second artificial satellites 101 and 102 move along the polar orbits, the rotation of the earth 205 may allow the artificial satellites 101 and 102 to pass over most of the regions on the earth 205. Therefore, if the first and second artificial satellites 101 and 102 are equipped with terrestrial photographing equipment, the first and second artificial satellites 101 and 102 may capture a substantial portion of the ground surface.

According to an example embodiment, the first artificial satellite 101 may include a small or micro artificial satellite, for example, CubeSat. The CubeSat refers to a micro artificial satellite with a volume of about 10cm^3 or less and a mass of 1.33 kg or less. The CubeSat is small, light, mountable with a camera, and relatively low-priced for manufacture and launch, however, has a relatively insufficient space to store data. Accordingly, the CubeSat caches gathered data during a short period of time and discards or deletes the data after a predetermined period of time.

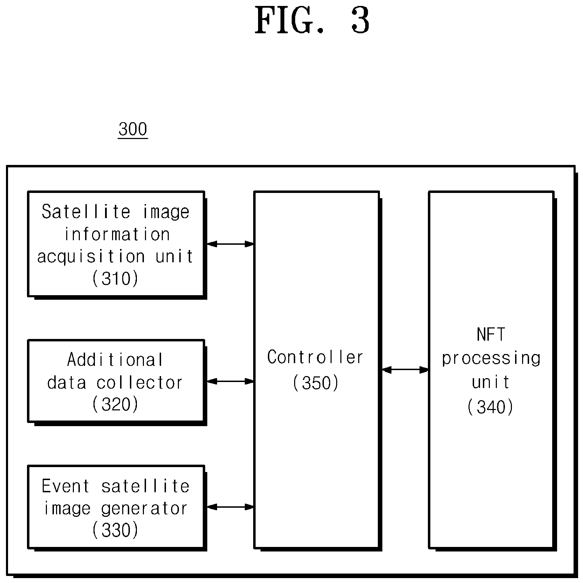

Hereinafter, technology for generating an event satellite image by applying additional data to a satellite image captured at an occurrence point in time of a specific event is further described with reference to FIGS. 3 to 6.

FIG. 3 is a diagram illustrating an event satellite image generation apparatus 300 according to an example embodiment.

The event satellite image generation apparatus 300 according to an example embodiment may generate and store a satellite image at an occurrence point in time of a specific event. Also, the event satellite image generation apparatus 300 may generate an event satellite image by applying additional data of a customer to the satellite image and may manage the generated event satellite image using a non-fungible token (NFT), thereby enabling commercial transactions in which ownership of the satellite image is clear and transparent.

For example, the event satellite image generation apparatus 300 according to an example embodiment may generate a story with a personal history by applying an NFT.

In detail, the event satellite image generation apparatus 300 may generate an event satellite image of a main gate, a building, or a specific sculpture of a university by capturing an artificial satellite image with an artificial satellite and by applying a comment, a photo, a signature, etc., which may be recorded by an individual, to the captured artificial satellite image as additional data.

In this case, the artificial satellite may be one of its own company or may be one of another company that owns artificial satellites and is capable of controlling a shooting. Technology for requesting capturing of an image for a specific location through the artificial satellite and acquiring raw data of a satellite image from the artificial satellite or a ground station refers to technology widely used.

As an example of the event satellite image, for a proposal event of lovers, the event satellite image generation apparatus 300 may capture a placard installed on the Han river or the beach as a satellite image and may add content, such as a commented photo, to commemorate the corresponding event, and may protect the satellite image through an NFT.

Also, the event satellite image generation apparatus 300 may generate an event satellite image by capturing a corresponding scene on the day of the Korean Series match between LG and Doosan held at Jamsil Main Stadium as a satellite image and by inserting a signature image of a player with information, such as a date and a time. Also, an NFT may be applied to the generated event satellite image.

Also, the event satellite image generation apparatus 300 may generate an event satellite image by applying additional data to a satellite image, such as Olympics, World Cup, and BTS outdoor performance, and may protect the event satellite image by applying an NFT thereto.

The generated event satellite image may be recorded and stored in a physical storage device and may also be stored in Cloud or a digital storage.

Also, the generated event satellite image may be traded through a bid on a platform when a corresponding owner desires to sell the generated event satellite image.

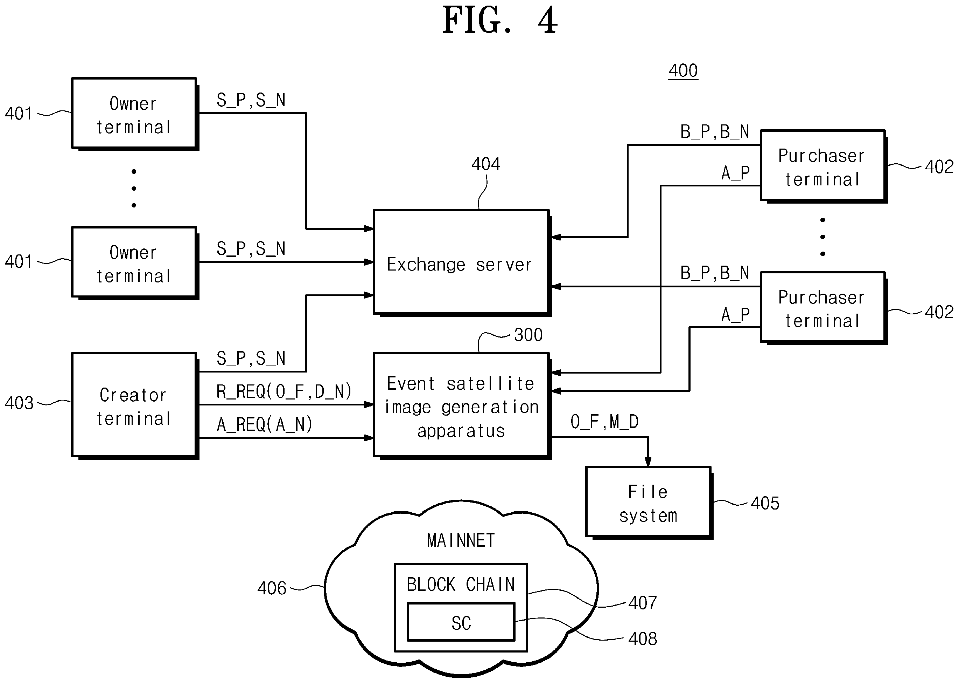

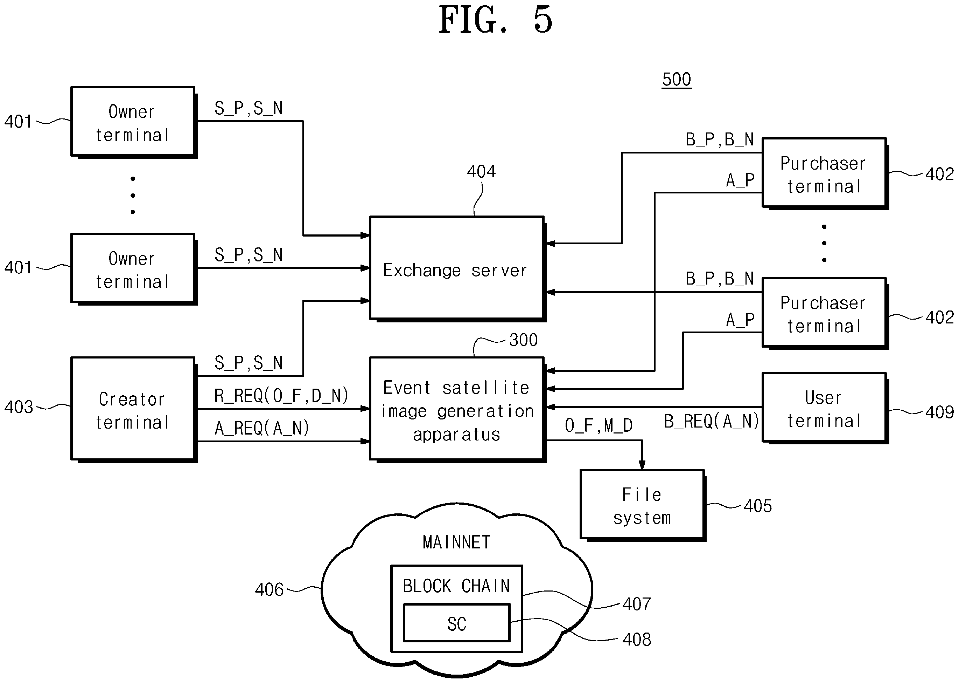

A transaction of the event satellite image is described below with reference to FIGS. 4 and 5. Hereinafter, Operations of components that constitute the event satellite image generation apparatus 300 are described.

To generate an event satellite image from a satellite image, the event satellite image generation apparatus 300 may include a satellite image information acquisition unit 310, an additional data collector 320, and an event satellite image generator 330.

The satellite image information acquisition unit 310 according to an example embodiment may acquire raw data of a satellite image captured at an occurrence point in time of a specific event.

Here, the specific event relates to a history that a customer desires commemorate and may be interpreted as, for example, a graduation ceremony, an entrance ceremony, a specific KBO match, an outdoor performance of a specific celebrity, and a birth of a child.

The additional data collector 320 according to an example embodiment may collect additional data for the specific event.

The additional data collector 320 may collect the additional data for the specific event from a customer terminal, or may collect, from the customer terminal, link information of a server in which the additional data for the specific event is recorded.

In the case of a large capacity of additional data or information that needs to be acquired through a server of a specific institution, for example, KBO, link information of the server may be provided to omit series of complex processes in which the customer terminal collects and retransmits the additional data from the server.

The additional data collector 320 may collect the additional data for the specific event. Here, the additional data may be any data that may identify or commemorate a history, for example, a date, a time footprint, a signature of a specific person, an image, and a video at an occurrence point in time of the specific event.

The event satellite image generator 330 according to an example embodiment may generate an event satellite image by recording the collected additional data to the acquired raw data of the satellite image.

The event satellite image generation apparatus 300 may further include an NFT processing unit 340 configured to manage the event satellite image based on an NFT.

The NFT processing unit 340 according to an example embodiment may receive, from a customer terminal, a registration request that includes an original file of the event satellite image and the number of divisions (hereinafter, a division number) for dividing ownership of the event satellite image, and may generate the division number of NFTs each having a unique token ID corresponding to the event satellite image and having an owner address of the event satellite image, using a smart contract.

The NFT processing unit 340 according to an example embodiment may determine a purchaser corresponding to at least one of a plurality of purchaser terminals as a buyer based on an NFT buy request for the event satellite image received from each of the plurality of purchaser terminals.

Also, the NFT processing unit 340 may transmit at least some of the NFTs for the event satellite image from an address of an owner to an address of the buyer using the smart contract, and may store, in a blockchain, a history in which ownership of at least some of the NTFs is changed from the address of the owner to the address of the buyer.

When sale of physical goods manufactured using the event satellite image is registered, the NFT processing unit 340 may conclude a purchase contract for the physical goods based on a purchase request for the physical goods and may transmit an amount of sales corresponding to the purchase contract from an e-wallet of a consumer to an e-wallet of a customer.

FIG. 4 is a diagram illustrating an example of a configuration of an overall system based on an NFT according to an example embodiment.

As described above, a trading method of an event satellite image may be performed through an overall system 400 to which the event satellite image generation apparatus 300 is applied.

A configuration and an operation of the overall system 400 and the trading method of the event satellite image performed by the overall system 400 are further descri bed.

A creator may transmit, to the event satellite image generation apparatus 300, a registration request (R_REQ) that includes an original file (O_F) of the event satellite image and a division number (D_N) for dividing ownership of the event satellite image through a creator terminal 403.

The creator refers to an entity that creates the event satellite image and desires to sell the event satellite image through the event satellite image generation apparatus 300 and may be interpreted as a customer that uses a service related to the event satellite image.

In response to receiving, from the creator terminal 403, the registration request (R_REQ) that includes the original file (O_F) of the event satellite image and the division number (D_N) for dividing the ownership of the event satellite image, the event satellite image generation apparatus 300 may generate, on a blockchain 407, the division number (D_N) of NFTs each having a unique token ID corresponding to the event satellite image and having an address of the creator as an owner address, using a smart contract 408 distributed to the blockchain 407.

Therefore, in response to the registration request (R_REQ) received from the creator terminal 403, an initial owner of each of the division number (D_N) of NFTs generated on the blockchain 407 by the event satellite image generation apparatus 300 may be set as the creator.

In an example embodiment, the smart contract 408 distributed to the blockchain 407 by the event satellite image generation apparatus 300 may be a smart contract written according to the Ethereum Request for Comments (ERC)-1155 token standard.

Meanwhile, in the case of generating the division number (D_N) of NFTs in response to the registration request (R_REQ), the event satellite image generation apparatus 300 may store the original file (O_F) of the event satellite image included in the registration request (R_REQ) in a file system 405 present outside the blockchain 407 and may generate metadata (M_D) that includes information on the event satellite image and then store the metadata (M_D) in the file system 405.

In an example embodiment, the file system 405 may be a distributed file system, for example, an interplanetary file system (IPFS).

In an example embodiment, the registration request (R_REQ) received from the creator terminal 403 may further include a name of the event satellite image, a description related to the event satellite image, and an e-signature of the creator in addition to the original file (O_F) of the event satellite image and the division number (D_N) for dividing the ownership of the event satellite image.

In this case, in the case of calculating the division number (D_N) of NFTs in response to the registration request (R_REQ), the event satellite image generation apparatus 300 may store the original file (O_F) of the event satellite image included in the registration request (R_REQ) in the file system 405 and may calculate a hash value of the original file (O_F) and then generate the metadata (M_D) that includes the name of the event satellite image, the description related to the event satellite image, the e-signature of the creator, the hash value, and a path for the original file (O_F) stored in the file system 405 and store the metadata (M_D) in the file system 405.

Then, the event satellite image generation apparatus 300 may associate the path for the metadata (M_D) stored in the file system 405 with token IDs of NFTs for the event satellite image and may store the same in the blockchain 407.

Also, the event satellite image generation apparatus 300 may additionally store a variety of information on the event satellite image included in the original file (O_F) of the event satellite image and the metadata (M_D) in an internal database.

As described above, the metadata (M_D) for the event satellite image includes the address of the creator. Therefore, although the number of NFTs owned by the creator by selling all the NFTs for the event satellite image becomes zero, information indicating that a person having created the event satellite image corresponding to the NFT is the creator may be continuously stored in the metadata (M_D) connected to the NFT.

In general, a size of the original file (O_F) of the event satellite image is relatively greater than a size of data storable in a single block of the blockchain 407. Therefore, in the case of storing the original file (O_F) of the event satellite image and the metadata (M_D) for the event satellite image in the blockchain 407, a large amount of time and large cost (gas) may be required for storage.

On the contrary, the event satellite image generation apparatus 300 included in the overall system 400 to which the event satellite image generation apparatus 300 according to the present disclosure is applied stores the original file (O_F) of the event satellite image and the metadata (M_D) for the event satellite image in the file system 405 present outside the blockchain 407 and stores the path for the metadata (M_D) stored in the file system 405 and token IDs of NFTs for the event satellite image in the blockchain 407 through mutual association therebetween.

As described above, since the original file (O_F) and the metadata (M_D) are stored in the file system 405 present outside the blockchain 407, the event satellite image generation apparatus 300 included in the overall system 400 to which the event satellite image generation apparatus 300 is applied may reduce an amount of time and cost used to store the original file (O_F) and the metadata (M_D) and may quickly access the original file (O_F) and the metadata (M_D). Also, since the path for the metadata (M_D) stored in the file system 405 and the token IDs of the NFTs for the event satellite image are associated with each other and thereby stored in the blockchain 407, connection between the NFTs for the event satellite image generated on the blockchain 407 and the metadata (M_D) stored in the file system 405 may be clearly guaranteed.

Depending on example embodiments, contents of the metadata (M_D) stored in the file system 405 change. Therefore, to prevent disconnection between the NFTs for the event satellite image generated on the blockchain 407 and the original file (O_F) of the event satellite image, the event satellite image generation apparatus 300 may additionally add at least one piece of information included in the metadata (M_D) in the blockchain 407.

For example, the event satellite image generation apparatus 300 may further strengthen the connection between the NFTs for the event satellite image generated on the blockchain 407 and the original file (O_F) stored in the file system 405 by additionally storing the path for the original file (O_F) included in the metadata (M_D) and stored in the file system 405 in the blockchain 407.

Referring again to FIG. 4, after the event satellite image generation apparatus 300 generates the division number (D_N) of NFTs for the event satellite image in response to the registration request (R_REQ), the creator may divide and sell the ownership of the event satellite image using the NFTs.

In an example embodiment, the creator may divide and sell the ownership of the event satellite image in an auction manner.

The creator terminal 403 that may be interpreted as the customer terminal may transmit, to the event satellite image generation apparatus 300, an auction request (A_REQ) that includes an auction-requested number (A_N) corresponding to the number of NFTs to be sold through an auction among the division number (D_N) of NFTs for the event satellite image.

In the case of receiving the auction request (A_REQ) that includes the auction-requested number (A_N) of NFTs for the event satellite image from the creator terminal 403, the event satellite image generation apparatus 300 may register the auction-requested number (A_N) of NFTs for the event satellite image to the auction in response to the auction request (A_REQ).

In an example embodiment, in the case of receiving the auction request (A_REQ) from the creator terminal 403, the event satellite image generation apparatus 300 may retrieve the number of NFTs each having the address of the creator as an owner address among the division number (D_N) of NFTs generated for the event satellite image.

Here, when the retrieved number is less than the auction-requested number (A_N), it may represent that the creator requests to sell the number of NFTs greater than the number of NFTs currently owned by the creator through the auction. Therefore, the event satellite image generation apparatus 300 may transmit an auction disallow message to the creator terminal 403 and may not initiate the auction for the auction-requested number (A_N) of NFTs.

On the contrary, when the retrieved number is greater than or equal to the auction-requested number (A_N), the event satellite image generation apparatus 300 may initiate an online auction for the auction-requested number (A_N) of NFTs for the event satellite image.

For example, the event satellite image generation apparatus 300 may initiate the online auction by posting a bid screen in which a plurality of purchaser terminals 402 may bid for the auction-requested number (A_N) of NFTs for the event satellite image.

When the online auction is initiated, the event satellite image generation apparatus 300 may receive a bid price (A_P) for the auction-requested number (A_N) of NFTs from each of the plurality of purchaser terminals 402 and may determine a purchaser corresponding to the purchaser terminal 402 having transmitted a highest bid price (A_P) among the plurality of purchaser terminals 402 as a successful bidder.

In an example embodiment, the auction request (A_REQ) may further include a minimum bid price for the auction-requested number (A_N) of NFTs.

In this case, the event satellite image generation apparatus 300 may determine only the bid price (A_P) greater than or equal to the minimum bid price (A_P) among the bid prices (A_P) received from the plurality of purchaser terminals 402 as a valid bid price. Here, if the valid bid price is absent among the bid prices (A_P) received from the plurality of purchaser terminals 402, the event satellite image generation apparatus 300 may terminate the online auction.

Meanwhile, when the successful bidder is determined, the event satellite image generation apparatus 300 may transmit the bid price (A_P) transmitted from the purchaser terminal 402 of the successful bidder from an e-wall of the successful bidder to an e-wallet of the creator and may transmit the auction-requested number (A_N) of NFTs for the event satellite image from an address of the creator to a address of the successful bidder using the smart contract 408 distributed to the blockchain 407.

Also, the event satellite image generation apparatus 300 may store a history in which ownership of the auction-requested number (A_N) of NFTs is changed from the address of the creator to the address of the successful bidder in the blockchain 407.

In an example embodiment, the event satellite image generation apparatus 300 may simultaneously perform an operation of transmitting the auction-requested number (A_N) of NFTs for the event satellite image from the address of the creator to the address of the successful bidder and an operation of storing the history in which the ownership of the auction-requested number (A_N) of NFTs is changed from the address of the creator to the address of the successful bidder in the blockchain 407.

For example, the event satellite image generation apparatus 300 may simultaneously perform an operation of transferring the auction-requested number (A_N) of NFTs for the event satellite image from the address of the creator to the address of the successful bidder and an operation of storing the history in which the ownership of the auction-requested number (A_N) of NFTs is changed from the address of the creator to the address of the successful bidder in the blockchain 407 using a TransferSingle event or a TransferBatch event implemented in the smart contract 408 in accordance with the ERC-1155 token standard.

In an example embodiment, referring to FIG. 4, the overall system 400 to which the event satellite image generation apparatus 300 is applied may further include an exchange server 404.

In this case, the satellite image generation apparatus 300 may initiate a free trading for the division number (D_N) of NFTs by listing (go public) the division number (D_N) of NFTs for the event satellite image on the exchange server 404.

In an example embodiment, the exchange server 404 may be operated by an operator that operates the event satellite image generation apparatus 300.

Hereinafter, a trading method of NFTs for the event satellite image through listing is described.

The creator terminal 403 may transmit a listing request for the NFTs for the event satellite image to the event satellite image generation apparatus 300.

In response to the listing request received from the creator terminal 403, the event satellite image generation apparatus 300 may list the division number (D_N) of NFTs for the event satellite image on the exchange server 404.

When the division number (D_N) of NFTs for the event satellite image are listed on the exchange server 404, the exchange server 404 may receive a sell price (S_P) and a sell number (S_N) for the NFTs from each of owner terminals 401 of a plurality of owners each owning at least one NFT for the event satellite image and may receive a buy price (B_P) and a buy number (B_N) for the NFTs from the plurality of purchaser terminals 402.

Here, if the creator still owns at least one NFT for the event satellite image, the creator terminal 403 may also be the owner terminal 401.

Also, the purchaser terminal 402 of a purchaser that is determined as a successful bidder through the aforementioned auction method and purchases at least one NFT for the event satellite image may be the owner terminal 401.

Also, when the sell price (S_P) and the buy price (B_P) match, the exchange server 404 may determine an owner corresponding to the owner terminal 401 that has transmitted the matching sell price (S_P) as a seller and may determine a purchaser corresponding to the purchaser terminal 402 that has transmitted the matching buy price (B_P) as a buyer and may determine a number corresponding to a smaller or equal value between the sell number (S_N) and the buy number (B_N) as a signed number.

In an example embodiment, when the exchange server 404 operates as a node of a mainnet 406 through connection to the mainnet 406, the exchange server 404 may transmit an amount acquired by multiplying the signed number by the matching sell price (S_P) from an e-wallet of the buyer to an e-wallet of the seller, and may transmit the signed number of NFTs for the event satellite image from an address of the seller to an address of the buyer using the smart contract 408 distributed to the blockchain 407.

Also, the exchange server 404 may store, in the blockchain 407, the history in which the ownership of the signed number of NFTs is changed from the address of the seller to the address of the buyer.

In an example embodiment, the exchange server 404 may simultaneously perform an operation of transmitting the signed number of NFTs for the event satellite image from the address of the seller to the address of the buyer and an operation of storing the history in which the ownership of the signed number of NFTs is changed from the address of the seller to the address of the buyer in the blockchain 407.

For example, the exchange server 404 may simultaneously perform an operation of transferring the signed number of NFTs for the event satellite image from the address of the seller to the address of the buyer and an operation of storing the history in which the ownership of the signed number of NFTs is changed from the address of the seller to the address of the buyer in the blockchain 407 using a TransferSingle event or a TransferBatch event implemented in the smart contract 408 in accordance with the ERC-1155 token standard.

In another example embodiment, the exchange server 404 may provide information on the seller, information on the buyer, the matching sell price (S_P), and the signed number to the event satellite image generation apparatus 300, and the event satellite image generation apparatus 300 may transmit an amount acquired by multiplying the signed number by the matching sell price (S_P) from the e-wallet of the buyer to the e-wallet of the seller, and may also perform an operation of transmitting the signed number of NFTs for the event satellite image from the address of the seller to the address of the buyer using the smart contract 408 distributed to the blockchain 407 and an operation of storing, in the blockchain 407, the history in which the ownership of the signed number of NFTs is changed from the address of the seller to the address of the buyer.

As described above, since the overall system 400 to which the event satellite image generation apparatus 300 according to example embodiments is applied may manage the ownership of the event satellite image using the division number (D_N) of NFTs each having a unique token ID corresponding to the event satellite image, the creator may divide the ownership of the event satellite image based on a desired number and thereby sell the same according to a selection and the divided ownership of the event satellite image may be safely and freely traded among users.

FIG. 5 is a diagram illustrating another example of a configuration of an overall system 500 based on an NFT according to an example embodiment.

The overall system 500 of FIG. 5 represents a system for safely trading physical goods manufactured using an event satellite image and safely and fairly distributing profits according to sale of the physical goods to owners of the event satellite image using the overall system 400 of FIG. 4 to which the event satellite image generation apparatus 300 is applied.

Referring to FIG. 5, the overall system 500 may be identical to the overall system 400 of FIG. 4 to which the event satellite image generation apparatus 300 is applied, except that the overall system 500 further includes a user terminal 409 compared to the overall system 400 of FIG. 4 to which the event satellite image generation apparatus 300 is applied.

The configuration and the operation of the overall system 400 of FIG. 4 to which the event satellite image generation apparatus 300 is applied are described in detail with reference to FIG. 4. In the following, the repeated description of the overall system 400 of FIG. 4 is omitted and only matters related to a transaction of physical goods manufactured using the event satellite image will be described in detail.

A trading method of an event satellite image may be performed through the overall system 500 of FIG. 5 capable of trading the event satellite image .

Hereinafter, a configuration and an operation of the overall system 500 capable of trading the event satellite image and the trading method of the event satellite image performed by the overall system 500 are described in detail.

A creator that creates an event satellite image and desires to sell the event satellite image through the event satellite image generation apparatus 300 may transmit, to the event satellite image generation apparatus 300, a registration request (R_REQ) that includes an original file (O_F) of the event satellite image and a division number (D_N) for dividing the ownership of the event satellite image through the creator terminal 403.

In the case of receiving, from the creator terminal 403 the registration request (R_REQ) that includes the original file (O_F) of the event satellite image and the division number (D_N) for dividing the ownership of the event satellite image, the event satellite image generation apparatus 300 may generate, on the blockchain 407, the division number (D_N) of NFTs each having a unique token ID corresponding to the event satellite image and having an address of the creator as an owner address, using the smart contract 408 distributed to the blockchain 4071

A method of generating, by the event satellite image generation apparatus 300, the division number (D_N) of NFTs for the event satellite image is described in detail with reference to FIG. 4 and thus, further description is omitted here.

In response to an NFT buy request for the event satellite image received from each of the plurality of purchaser terminals 402, the event satellite image generation apparatus 300 may determine a purchaser corresponding to at least one of the plurality of purchaser terminals 402 as a buyer, may transmit at least some of NFTs for the event satellite image from an address of the creator to an address of the buyer using the smart contract 408, and may store, in the blockchain 407, history in which ownership of at least some of the NFTs is changed from the address of the creator to the address of the buyer.

In an example embodiment, the event satellite image generation apparatus 300 may simultaneously perform an operation of transmitting at least some of the NFTs for the event satellite image from the address of the creator to the address of the buyer using the smart contract 408 and an operation of storing, in the blockchain 407, the history in which the ownership of at least some of the NFTs is changed from the address of the creator to the address of the buyer.

In an example embodiment, the event satellite image generation apparatus 300 may determine a buyer using an auction method.

In detail, in the case of receiving an auction request (A_REQ) that includes the auction-requested number (A_N) of NFTs for the event satellite image from the creator terminal 403, the event satellite image generation apparatus 300 may register the auction-requested number (A_N) of NFTs for the event satellite image to an auction in response to the auction request (A_REQ).

In this case, the event satellite image generation apparatus 300 may receive a bid price (A_P) for the auction-requested number (A_N) of NFTs from each of the plurality of purchaser terminals 402 and may determine a purchaser corresponding to the purchaser terminal 402 having transmitted a highest bid price (A_P) among the plurality of purchaser terminals 402 as a buyer.

In another example embodiment, the event satellite image generation apparatus 300 may determine the buyer using a listing (going public) method.

In detail, in the case of receiving a listing request for the NFTs for the event satellite image from the creator terminal 403, the event satellite image generation apparatus 300 may list the division number (D_N) of NFTs for the event satellite image on the exchange server 404 in response to the listing request.

In this case, the exchange server 404 may receive a sell price (S_P) and a sell number (S_N) for the NFTs from the creator terminal 403.

Also, the exchange server 404 may receive the sell price (S_P) and the sell number (S_N) for the NFTs from each of the owner terminals 401 of a plurality of owners each owning at least one NFT for the event satellite image in addition to the creator terminal 403.

Here, the purchaser terminal 402 of a purchaser having purchased at least one NFT for the event satellite image from the creator through the aforementioned auction method may also be the owner terminal 401.

Also, the exchange server 404 may receive a buy price (B_P) and a buy number (B_N) for NFTs from each of the plurality of purchaser terminals 402.

When the sell price (S_P) and the buy price (B_P) match, the exchange server 404 may determine an owner corresponding to the creator terminal 403 or the owner terminal 401 that has transmitted the matching sell price (S_P) as a seller and may determine a purchaser corresponding to the purchaser terminal 402 that has transmitted the matching buy price (B_P) as a buyer.

A method of dividing, by the event satellite image generation apparatus 300, and thereby trading the ownership of the event satellite image using the auction method and a method of dividing, by the event satellite image generation apparatus 300, and thereby trading the ownership of the event satellite image using the listing method, using the division number (D_N) of NFTs are described above with reference to FIG. 4 and thus, further description is omitted here.

Meanwhile, an operator of the event satellite image generation apparatus 300 may plan, manufacture, and sell physical goods using the event satellite image.

For example, the operator may manufacture and sell mugs printed with the event satellite image.

Then, the operator may acquire a portion of an amount (i.e., amount of sales) acquired by selling physical goods as benefits of the operator and may distribute the remainder excluding the benefits of the operator from the amount of sales to a plurality of owners owning at least one NFT for the event satellite image in exchange for the use of the event satellite image.

In detail, the event satellite image generation apparatus 300 may register sale of physical goods manufactured using the event satellite image.

For example, the event satellite image generation apparatus 300 may register the sale of physical goods by uploading an image of the physical goods and an amount of sales thereof to a product sales page of the event satellite image generation apparatus 300.

Then, the event satellite image generation apparatus 300 may conclude a purchase contract for physical goods with the user terminal 409 based on a buy request (B_REQ) for the physical goods received from the user terminal 409 of a user that desires to purchase the physical goods.

For example, in the case of receiving the buy request (B_REQ) for the physical goods from the user terminal 409, the event satellite image generation apparatus 300 may conclude an e-contract for the user terminal 409 to purchase the physical goods at a sell price and may store the e-contract in an internal database.

When the purchase contract is concluded between the event satellite image generation apparatus 300 and the user terminal 409, the event satellite image generation apparatus 300 may transmit an amount of sales corresponding to the purchase contract from an e-wallet of a user corresponding to the user terminal 409 to an e-wallet of the operator of the event satellite image generation apparatus 300.

Then, the event satellite image generation apparatus 300 may distribute a portion of the amount of sales transmitted to the e-wallet of the operator from the e-wallet of the operator to an e-wallet of each of a plurality of owners each owning at least one NFT for the event satellite image in exchange for the use of the event satellite image.

Hereinafter, an example of a method of distributing, by the event satellite image generation apparatus 300, a portion of an amount of sales for physical goods to an e-wallet of each of the plurality of owners is described.

The event satellite image generation apparatus 300 may determine a total amount of dividends to be distributed to the plurality of owners in the amount of sales for the physical goods.

In an example embodiment, the event satellite image generation apparatus 300 may conclude an e-contract in advance with the owner terminals 401 of the plurality of owners with respect to a dividend rate corresponding to a ratio of the total amount of dividends to be distributed to the plurality of owners to the amount of sales for physical goods manufactured using the event satellite image.

In another example embodiment, when generating the division number (D_N) of NFTs each having a unique token ID corresponding to the event satellite image on the blockchain 407 in response to the registration request (R_REQ) received from the creator terminal 403, the event satellite image generation apparatus 300 may conclude an e-contract in advance with the creator terminal 403 with respect to a dividend rate corresponding to a ratio of a total amount of dividends to be distributed to the plurality of owners to the amount of sales for physical goods manufactured using the event satellite image.

In this case, the event satellite image generation apparatus 300 may determine an amount acquired by multiplying the amount of sales for the physical goods by the dividend rate according to the concluded e-contract as a total amount of dividends.

The event satellite image generation apparatus 300 may determine a dividend for each of the plurality of owners based on the number of NFTs for the event satellite image owned by each of the plurality of owners and the total amount of dividends.

For example, the event satellite image generation apparatus 300 may determine a share ratio corresponding to a ratio of NFTs for the event satellite image owned by each of the plurality of owners to the division number (D_N) for each of the plurality of owners and then determine an amount acquired by multiplying the total amount of dividends by the share ratio determined for each of the plurality of owners as a dividend for each of the plurality of owners.

The event satellite image generation apparatus 300 may maintain an amount acquired by subtracting the total amount of dividends from the amount of sales for the physical goods in the e-wallet of the operator as benefits of the operator and may transmit the dividend determined for each of the plurality of owners from the e-wallet of the operator to the e-wallet of each of the plurality of owners.

As described above, the metadata (M_D) for the event satellite image includes the address of the creator. Therefore, although the number of NFTs owned by the creator by selling all the NFTs for the event satellite image becomes zero, information indicating that a person having created the event satellite image corresponding to the NFT is the creator may be continuously stored in the metadata (M_D) connected to the NFT.

Therefore, depending on example embodiments, the event satellite image generation apparatus 300 may distribute a portion of the amount of sales for the physical goods even to the creator regardless of whether the creator currently owns at least one NFT for the event satellite image or whether the number of NFTs for the event satellite image currently owned by the creator by selling all the NFTs for the event satellite image is zero.

To this end, regardless of the number of NFTs for the event satellite image having the address of the creator as the owner address, the event satellite image generation apparatus 300 may transmit a portion of the amount of sales for physical goods from the e-wallet of the operator to the e-wallet of the creator in exchange for creating the event satellite image every time the physical goods manufactured using the event satellite image are sold.

In this case, the event satellite image generation apparatus 300 may maintain an amount acquired by subtracting the total amount of dividends and creation cost from the amount of sales for the physical goods in the e-wallet of the operator as benefits of the operator.

As described above with reference to FIGS. 4 and 5, the operator of the event satellite image generation apparatus 300 may directly plan, manufacture, and sell physical goods using the event satellite image, may have a portion of the amount of sales for the physical goods as benefits of the operator, may transmit another portion of the amount of sales to the creator in exchange for creating the event satellite image, and may distribute the remainder excluding the benefits of the operator and the creation cost from the amount of sales to the plurality of owners owning at least one NFT for the event satellite image in exchange for using the event satellite image.

Therefore, through the overall system 500 capable of trading the event satellite image according to example embodiments, the operator may earn benefits from the sale of physical goods and the creator and the plurality of owners may also receive a distribution of benefits for using the event satellite image. Therefore, trading of the divided ownership for the event satellite image may become more active.

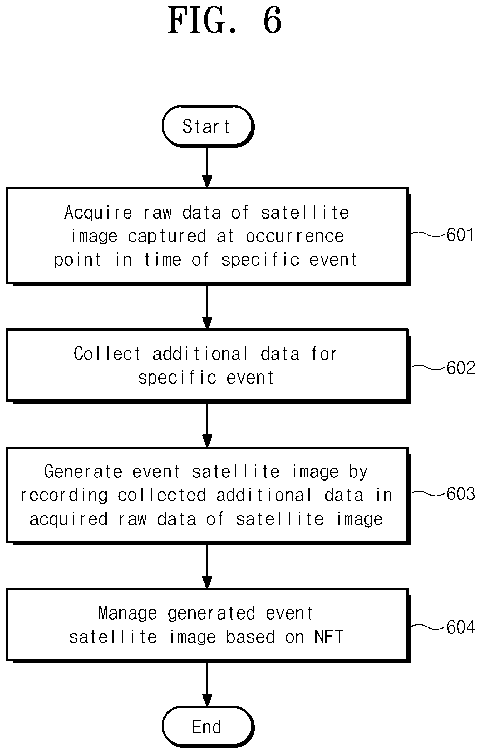

FIG. 6 is a flowchart illustrating an example of an event satellite image generation method according to an example embodiment.

In operation 601, the event satellite image generation method may acquire raw data of a satellite image captured at an occurrence point in time of a specific event.

In operation 602, the event satellite image generation method may collect additional data for the specific event.

To collect the additional data, the event satellite image generation method may collect the additional data for the specific event from a customer terminal, or may collect, from the customer terminal, link information of a server in which the additional data for the specific event is recorded.

To collect the additional data, at least one of a date, a time, a footprint, a signature of a specific person, an image, and a video at the occurrence point in time of the specific event may be included as the additional data for the specific event.

Also, in operation 603, the event satellite image generation method may generate an event satellite image by recording the collected additional data in the acquired raw data of the satellite image.

In operation 604, the event satellite image generation method may manage the generated event satellite image by applying an NFT.

In detail, the event satellite image generation method according to an example embodiment may receive, from a customer terminal, a registration request that includes an original file of the event satellite image and a division number for dividing ownership of the event satellite image.

The event satellite image generation method may generate, on a blockchain, the division number of NFTs each having a unique token ID corresponding to the event satellite image and having an owner address of the event satellite image using a smart contract, and may determine a purchaser corresponding to at least one of a plurality of purchaser terminals as a buyer based on an NFT buy request for the event satellite image received from each of the plurality of purchaser terminals.

The event satellite image generation method may transmit at least some of the NFTs for the event satellite image from an address of an owner to an address of the buyer using the smart contract.

The event satellite image generation method may store, in the blockchain, a history in which ownership of at least some of the NTFs is changed from the address of the owner to the address of the buyer.

The event satellite image generation method may register sale of physical goods manufactured using the event satellite image, and may conclude a purchase contract for the physical goods based on a purchase request for the physical goods.

Also, the event satellite image generation method may transmit an amount of sales corresponding to the purchase contract from an e-wallet of a consumer to an e-wallet of a customer and may distribute a portion of the amount of sales from the e-wallet of the customer to an e-wallet of each of a plurality of owners each owning at least one NFT for the event satellite image.

According to some example embodiments, it is possible to generate a utilization service that may commemorate history by receiving raw data from a satellite and to generate and store a satellite image at an occurrence point in time of a specific event. In addition, it is possible to generate an event satellite image by applying additional data of a customer to a satellite image and to manage the generated event satellite image using an NFT, thereby enabling commercial transactions in which ownership of the satellite image is clear and transparent.

The apparatuses described herein may be implemented using hardware components, software components, and/or a combination thereof.

The software may include a computer program, a piece of code, an instruction, or some combinations thereof, for independently or collectively instructing or configuring the processing device to operate as desired. Software and/or data may be embodied permanently or temporarily in any type of machine, component, physical equipment, virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more computer readable storage mediums.

The method according to the above-described example embodiments may be recorded in non-transitory computer-readable media including such program instructions to implement various operations which may be performed through various computer methods.

While this disclosure includes specific example embodiments, it will be apparent to one of ordinary skill in the art that various alterations and modifications in form and details may be made in these example embodiments without departing from the spirit and scope of the claims and their equivalents. For example, suitable results may be achieved if the described techniques are performed in a different order, and/or if components in a described system, architecture, device, or circuit are combined in a different manner, and/or replaced or supplemented by other components or their equivalents.

Therefore, the scope of the disclosure is defined not by the detailed description, but by the claims and their equivalents, and all variations within the scope of the claims and their equivalents are to be construed as being included in the disclosure.

## Claims

1. An apparatus for generating an event satellite image, the apparatus comprising:
a satellite image information acquisition unit configured to acquire raw data of a satellite image captured at an occurrence point in time of a specific event;
an additional data collector configured to collect additional data for the specific event; and
an event satellite image generator configured to generate an event satellite image by recording the collected additional data in the acquired raw data of the satellite image.

2. The apparatus of claim 1, wherein the additional data collector is configured to collect the additional data for the specific event from a customer terminal.

3. The apparatus of claim 2, wherein the additional data collector includes, as the additional data for the specific event, at least one of a date, a time, a footprint, a signature of a specific person, an image, and a video at the occurrence point in time of the specific event.

4. The apparatus of any one of claims 1 to 3, wherein the additional data collector is configured to collect, from the customer terminal, link information of a server in which the additional data for the specific event is recorded.

5. The apparatus of any one of claims 1 to 4, further comprising:
a non-fungible token (NF) processing unit configured to manage the event satellite image based on an NFT,
wherein the NFT processing unit is configured to,
receive, from a customer terminal, a registration request that includes an original file of the event satellite image and a division number for dividing ownership of the event satellite image, and
generate, on a blockchain, the division number of NFTs each having a unique token ID corresponding to the event satellite image and having an owner address of the event satellite image using a smart contract.

6. The apparatus of claim 5, wherein the NFT processing unit is configured to,
determine a purchaser corresponding to at least one of a plurality of purchaser terminals as a buyer based on an NFT buy request for the event satellite image received from each of the plurality of purchaser terminals,
transmit at least some of the NFTs for the event satellite image from an address of an owner to an address of the buyer using the smart contract,
store, in the blockchain, a history in which ownership of at least some of the NTFs is changed from the address of the owner to the address of the buyer,
register sale of physical goods manufactured using the event satellite image,
conclude a purchase contract for the physical goods based on a purchase request for the physical goods, and
transmit an amount of sales corresponding to the purchase contract from an e-wallet of a consumer to an e-wallet of a customer.

7. The apparatus of claim 6, wherein the NFT processing unit is configured to distribute a portion of the amount of sales from the e-wallet of the customer to an e-wallet of each of a plurality of owners each owning at least one NFT for the event satellite image.

8. A method of generating an event satellite image, the method comprising:
acquiring raw data of a satellite image captured at an occurrence point in time of a specific event;
collecting additional data for the specific event; and
generating an event satellite image by recording the collected additional data in the acquired raw data of the satellite image.

9. The method of claim 8, wherein the collecting of the additional data comprises collecting the additional data for the specific event from a customer terminal, or collecting, from the customer terminal, link information of a server in which the additional data for the specific event is recorded.

10. The method of claim 9, wherein the collecting of the additional data comprises including, as the additional data for the specific event, at least one of a date, a time, a footprint, a signature of a specific person, an image, and a video at the occurrence point in time of the specific event.

11. The method of any one of claims 8 to 10, further comprising:
receiving, from a customer terminal, a registration request that includes an original file of the event satellite image and a division number for dividing ownership of the event satellite image;
generating, on a blockchain, the division number of NFTs each having a unique token ID corresponding to the event satellite image and having an owner address of the event satellite image using a smart contract;
determining a purchaser corresponding to at least one of a plurality of purchaser terminals as a buyer based on an NFT buy request for the event satellite image received from each of the plurality of purchaser terminals;
transmitting at least some of the NFTs for the event satellite image from an address of an owner to an address of the buyer using the smart contract;
storing, in the blockchain, a history in which ownership of at least some of the NTFs is changed from the address of the owner to the address of the buyer;
registering sale of physical goods manufactured using the event satellite image;
concluding a purchase contract for the physical goods based on a purchase request for the physical goods;
transmitting an amount of sales corresponding to the purchase contract from an e-wallet of a consumer to an e-wallet of a customer; and
distributing a portion of the amount of sales from the e-wallet of the customer to an e-wallet of each of a plurality of owners each owning at least one NFT for the event satellite image.
